# EUROPÄISCHE PATENTSCHRIFT

(11) **EP 3 392 215 B1**
(45) Veröffentlichungstag und Bekanntmachung des Hinweises auf die Patenterteilung: **03.06.2020**
(21) Anmeldenummer: 18168025.7
(22) Anmeldetag: 18.04.2018
(51) Int. Cl.: C03B 25/04

(54) **VORRICHTUNG UND VERFAHREN ZUR KÜHLUNG EINES MITTELS ROHRZIEHEN GEFERTIGTEN GLASSTRANGS**
DEVICE AND METHOD FOR COOLING A GLASS STRAND MANUFACTURED BY DRAWING
DISPOSITIF ET PROCÉDÉ DE REFROIDISSEMENT D'UNE BARRE DE VERRE FABRIQUÉE PAR ÉTIREMENT DES TUBES

(30) Priorität: 21.04.2017 DE 102017108549
(43) Veröffentlichungstag der Anmeldung: 24.10.2018
(73) Patentinhaber: SCHOTT AG, 55122 Mainz (DE)
(72) Erfinder: Trinks, Volker, 95666 Mitterteich (DE); Ott, Franz, 95692 Konnersreuth (DE)
(74) Vertreter: Fuchs Patentanwälte Partnerschaft mbB

(56) Entgegenhaltungen:
- EP-A1- 1 382 581
- US-B1- 6 715 323

## Beschreibung

Die Erfindung betrifft eine Vorrichtung sowie ein Verfahren zur Kühlung eines mittels Rohrziehen gefertigten Glasstrangs. Insbesondere betrifft die Erfindung die Abkühlung von Glasrohren oder Glasstäben, die aus einem Glasstrang bzw. Rohrzug hergestellt werden, wobei z.B. das sog. Vello-Verfahren oder Danner-Verfahren angewendet wird.

Aus der DE-OS 1 596 373 ist ein derartiges Herstellungsverfahren, bei dem zur Verbesserung der Formgebung eines rohrförmigen Glasstrangs dieser durch eine Unterdruck- bzw. Vakuum-Kammer geführt wird, wodurch sich ein Druckunterschied zwischen dem Innenbereich des rohrförmige Glasstrangs und dem Außenbereich ergibt. Dadurch wird die zylindrische Formgebung des Glasstranges unterstützt und insbesondere beim Abkühlen des Glasstranges verhindert, dass dieser sich verformt und sich z.B. stellenweise zusammenzieht und dadurch oval wird. Die Kammer dient der Erzeugung eines großen Unterdrucks von etwa 100 - 600 mm WS und hat eine Länge von etwa 60 - 900 cm, damit ein möglichst langer Abschnitt des erhitzten und plastisch verformbaren Glasstranges mit dem Unterdruck beaufschlagt werden kann. Die Kammer ist an den Durchtrittstellen des Glasstranges mittels eng anliegenden Iris- oder Asbestverschlüssen gegen Druckverlust und Abkühlung des Glastrangs durch an den Durchtrittsstellen in die Kammer einströmende Luft abgedichtet. Die Kammer dient somit der Formgebung und nicht der Abkühlung des Glasstranges. Die Abkühlung erfolgt, wie bei einer ungekühlten Ziehbahn, durch Wärmeabstrahlung und einfache Konvektion, welche jedoch durch die abgeschlossene Konstruktion der Kammer erschwert wird.

Aus der Patentschrift US 3,873,293 ist bekannt, bei der Herstellung von Glasrohren am Beginn der Ziehbahn eine Vorrichtung in Form einer ringförmigen Venturi-Düse zu installieren, in die Pressluft eingeblasen wird. Mit Hilfe der Pressluft wird nach dem Injektor-Prinzip Umgebungsluft angesaugt und zur Kühlung des gezogenen Glasstrangs eine Luftströmung entlang des Glasstrang-Abschnitts im Bereich der Düse erzeugt. Um einen spürbaren Abkühlungseffekt zu erzielen, muss daher ausreichend viel Pressluft zugeführt werden. Diese Vorrichtung stellt somit eine Kühlvorrichtung dar. Die Abkühlung des Glasstranges erfolgt zwar berührungslos, ist aber aufgrund der kurzen Baulänge der Vorrichtung lokal auf einen relativ kurzen Abschnitt des Glasstranges begrenzt und hat nur eine geringe Kühlwirkung.

Die offengelegte Patentanmeldung EP 1 382 581 A1 offenbart eine Kühlvorrichtung, die bei einer Hochgeschwindigkeitskühlung einer optischen Faser verwendet wird. Die Kühlvorrichtung umfasst: einen Kühlkörper, der sich entlang der Längsrichtung der gezogenen optischen Faser erstreckt, wobei der Kühlkörper aus einem linken Kühlkörperteil und einem rechten Kühlkörperteil besteht, und wobei der Kühlkörper mit einer Verschlusskappe versehen ist ein Kühlgas durch die Verschlusskappe in den Kühlkörper eingeführt wird; und mindestens einen Turbulenzgenerator, der innerhalb des Kühlkörpers angeordnet ist, um die gezogene optische Faser zu umgeben, wobei der Turbulenzgenerator den molekularen Fluss des in den Kühlkörper eingespeisten Kühlgases aktiviert.

Die Patentschrift US 6 715 323 B1 offenbart ein Verfahren und eine Vorrichtung zum Kühlen einer optischen Faser während des Ziehprozesses der Faser. Insbesondere umfasst das vorliegende Verfahren zum Kühlen einer optischen Faser das Strömen eines Kühlgases auf die optische Faser, wobei die Strömungsrichtung des Kühlgases im Wesentlichen quer zur Längsachse der Faser verläuft. Durch Verwendung eines Kühlgasstroms, der im Wesentlichen quer zur Längsachse der gezogenen Faser verläuft, kann die Kühlleistung der Faser wesentlich verbessert werden. Die Vorrichtung umfasst einen hohlen länglichen Körper, welcher mindestens eine Wand aufweist, die einen inneren langgestreckten Raum definiert, durch den die gezogene Faser verläuft, wobei die mindestens eine Wand des hohlen länglichen Körpers mit mindestens einer Längsöffnung versehen ist, durch die ein Kühlgas in den Hohlkörper eingeleitet wird, und mit mindestens einer Längsöffnung versehen ist, durch die das Kühlgas aus dem Hohlkörper entfernt wird.

In der Patentschrift GB 1 202 630 wird eine tunnelförmige Vorrichtung zur Kühlung eines gezogenen Glasstranges beschrieben, wobei dieser Tunnel einen längeren Abschnitt des Glasstranges umfasst. Durch eine Luftabsaugung in der Nähe der Eintrittstelle wird in diesem länglichen Tunnel eine weitestgehend gleichmäßige Luftströmung erzeugt, die nach dem Gegenstromprinzip entlang des Glasstranges geführt wird. Ein spürbarer Abkühlungseffekt ergibt sich hier jedoch nur dann, wenn die Luftabsaugung ausreichend groß ist. Die Abkühlung erfasst zwar einen längeren Abschnitt des Glasstranges, kann aber nicht sehr weit variiert werden. Denn aufgrund der langen Baulänge des Tunnels und des angewendeten Gegenstromprinzips muss die Abkühlung so eingestellt werden, dass ein praktikabler Abkühlungsgradientenverlauf innerhalb des Tunnels eingehalten wird.

Der Weiteren sind aus der EP 0 331 691 B1 eine Vorrichtung und ein Verfahren zur Kühlung eines optischen Faser bekannt, wenn diese aus einem erhitzen Glasrohling gezogen wird, wobei die gezogene Faser durch einen Kühlraum geführt wird und ein gasförmiges Kühlmittel axial zur Faser um die Faser herum durch den Kühlraum geleitet wird.

Es sind also Vorrichtungen und ein Verfahren bekannt, bei denen durch freie Konvektion oder durch Anblasen mit einem gasförmigen Medium (Luft) eine Abkühlung des gezogenen Glasstranges herbeigeführt wird.

Aus der US 2003/000227 A1 sind ein Verfahren und eine Vorrichtung zum Kühlen von Komponenten von Anlagen bekannt, die von fließfähigen Medien durchströmt werden, insbesondere von Formgebungsaggregaten für Glasschmelzen und zum Abkühlen von geformten Glasteilen.

Daneben gibt es Vorrichtungen zur Formgebung, bei denen nicht die Abkühlung im Vordergrund der Betrachtung steht, wie z.B. die aus DE-OS 1 596 373 bekannte Vorrichtung. Eine weitere Vorrichtung dieser Art beschreibt das Patent US 3,190,739. Dort wird zur Verbesserung der Zylinderform das noch heiße Glasrohr mit einem Formteil in Berührung gebracht. Da das Formteil relativ kalt ist, erfolgt zwangsweise eine Abkühlung durch den direkten Kontakt der Glasoberfläche mit der Formteiloberfläche, dem sog. Gesenk. Dies wiederum ist nachteilig für die Qualität des hergestellten Glasrohres, weil der Direktkontakt zur Ausbildung von Oberflächendefekten im Glas führen kann, die anschließend nicht mehr ausgeglichen werden können.

Zudem sind noch Vorrichtungen und Verfahren bekannt, bei denen eine Abkühlung mittels Besprühen des Glasrohres mit Wasser erfolgt. Hier ist z.B. die Patentschrift US 3,260,586 zu nennen. Dort kommt das flüssige Kühlmedium (Wasser) direkt mit der Glasoberfläche in Kontakt, was sich ebenfalls nachteilig auf die Oberflächenqualität des Glasrohres auswirken kann und auf Grund der möglichen Dampfbildung an der Glasoberfläche keine konstante Abkühlrate erzeugt.

Es ist daher Aufgabe der Erfindung eine Vorrichtung und ein Verfahren zur Kühlung eines mittels Rohrziehen gefertigten Glasstrangs vorzuschlagen, die die oben genannten Nachteile überwinden. Insbesondere soll eine berührungsfreie Abkühlung erzielt werden, die keinen negativen Einfluss auf die Oberflächengüte des hergestellten Glasproduktes aufweist und die schnell, aber dennoch variabel, ist.

Gelöst wird die Aufgabe durch eine Vorrichtung mit den Merkmalen des Anspruchs 1 sowie durch ein Verfahren gemäß Anspruch 14 mit den Merkmalen des nebengeordneten Anspruchs.

Demnach wird eine Vorrichtung vorgeschlagen, die mindestens zwei entlang des Glasstranges zueinander beabstandet angeordnete Kühlkammern zur abschnittsweisen Kühlung des Glasstranges aufweist, wobei die Kühlkammern mit einer Einrichtung zur Zu- oder Abfuhr eines gasförmigen Kühlmediums verbunden sind, wobei der Glasstrang durch jede Kühlkammer hindurch geführt ist, und wobei an den Durchführungsstellen jeweils eine Blende vorgesehen ist, deren Öffnung größer als der Querschnitt des Glasstranges ist, um eine zwischen der Öffnung und der Oberfläche des Glasstranges sich ausbildende turbulente Strömung des gasförmigen Kühlmediums zu erzeugen.

Auch wird ein Verfahren zur Kühlung eines mittels Rohrziehen gefertigten Glasstrangs vorgeschlagen, wobei der Glasstrang zur abschnittsweisen Kühlung durch zwei oder mehrere entlang des Glasstranges zueinander beabstandet angeordnete Kühlkammern hindurch geführt wird, wobei an den Durchführungsstellen jeweils eine zwischen der Öffnung und der Oberfläche des Glasstranges sich ausbildende turbulente Strömung eines gasförmigen Kühlmediums erzeugt wird.

Durch diese Maßnahmen wird eine besonders effektiv wirkende berührungslose Abkühlung des Glasstranges erreicht. Dabei kann aufgrund der an den Blenden-Öffnungen erzeugten turbulenten Strömung des Kühlmediums schon bei einem geringen Volumenstrom eine hohe Abkühlrate erzielt werden. Insbesondere wird an der Ein- und Austrittsöffnung einer jeden Kammer eine rasche Abkühlung erzeugt. Die Vorrichtung kann sowohl für ein Ansaugen wie auch für ein Anblasen des gasförmigen Kühlmediums ausgestaltet werden. Durch den Einsatz von Blenden mit vorgebbaren Durchlass-Öffnungen kann gezielt ein Spalt um den Glasstrang herum ausgebildet werden, der eine optimale turbulente Strömung mit hoher Strömungsgeschwindigkeit bewirkt. Beispielsweise wird durch die Form der Blende ein kreisförmiger Ringspalt ausgebildet, aber auch andere Formgebungen sind möglich.

Insbesondere durch die beabstandete Anordnung von mehreren Kühlkammern bilden sich Bereiche mit Kühlung aus (in den Kammern) und Bereiche ohne Kühlung aus (zwischen den beabstandeten Kammern). Es erfolgt somit ein gezielter Einsatz von sich abwechselnden Bereichen mit Kühlung oder ohne Kühlung, d.h. eine alternierende Anordnung, wodurch sowohl eine hohe Abkühlleistung (in den Kammern) wie auch eine Vermeidung von hohen Spannungen im Erzeugnis (durch die ungekühlten Zwischenbereiche) erzielt werden. Im Unterschied dazu würde bei einer herkömmlichen Vorrichtung mit kontinuierlichen Kühlung von Fasern fortlaufend eine hohe Abkühlrate an der Oberfläche von Glaserzeugnissen (Stäben, Rohren) erzeugt und sich ein immer größerer Temperaturgradient ausbilden (bei Rohren zwischen der inneren und äußeren Oberfläche; bei Stäben zwischen der Glasmasse im Inneren des Stabes und Außenoberfläche). Und dann würden in bestimmten Temperaturbereichen durch diese Temperaturdifferenzen sehr hohe Material-Spannungen im Glaskörper entstehen, die zur Beeinträchtigung der Produktqualität bis hin zur Zerstörung des Erzeugnisses führen können. Durch die erfindungsgemäß definierte Anordnung von gekühlten und ungekühlten Zonen in der Vorrichtung kann die Ausbildung der genannten hohen Temperaturunterschiede effektiv vermieden werden, da in den ungekühlten Zonen ein Rückerwärmung der Oberfläche (Wärmestrom aus der inneren Glasmasse) erreicht wird, so dass die besagten Spannungen nicht auftreten und die Produktqualität deutlich verbessert wird. Durch die Dimensionierung und/oder Anzahl der Kühlkammern, die jeweils kompakt ausgeführt sein können, ist die Kühlleistung variabel einstellbar. Damit können auch Kühlungen im Bereich der Transformationstemperatur realisiert werden. Die Vorrichtung ist für eine Zufuhr wie auch Abfuhr von dem gasförmigen Kühlmedium (z.B. der Umgebungsluft) eingerichtet, so dass keine bevorzugte Strömungsrichtung berücksichtigt werden müsste. Jede Blende wirkt als Kühlstelle und nutzt das Kühlmedium (kalte Umgebungsluft) vollkommen aus; das Kühlmedium erreicht jede Kammer direkt; es wird kein Kühlmedium durch mehrere Kammern hintereinander durchgeleitet. Somit wird jede Kammer mit kalter (frischer) Umgebungsluft versorgt und es ergibt sich eine sehr hohe Kühlleistungs-Effizienz. Auch kann erreicht werden, dass an allen Kühlstellen (Blende) sich eine turbulente Strömung einstellt. Mit der erfindungsgemäßen Vorrichtung und von ihr ausgeführten Kühlungs-Verfahren kann bei Glaserzeugnissen, die eine gewisse Glasmasse aufweisen, wie z.B. Rohrglas, das Ziel einer schnellen und effizienten Abkühlung bei gleichzeitiger Vermeidung von Spannungen erreicht werden.

Diese und weitere vorteilhafte Ausgestaltungen der Erfindung ergeben sich auch aus den Unteransprüchen.

Die Kühlkammern können in einem vorgebaren Abstand zueinander angeordnet sein. Durch die Beabstandung der Kammern wird die Nutzung des Kühlmediums bzw. der frischen kalten Umgebungsluft an jeder einzelnen Kammer bzw. Blende sichergestellt, wodurch wiederum die Kühlleistungs-Effizienz erhöht wird. In Versuchen haben sich auch Kammerabstände von 0,2 und 0,3 m, aber auch Abstände größer als 0,5 m als wirkungsvoll erwiesen.

Die Einrichtung zur Zu- oder Abfuhr eines gasförmigen Kühlmediums kann als Belüftungssystem ausgestaltet sein, welches das gasförmige Kühlmedium in jede der Kühlkammern einbläst oder durch jede der Kühlkammern aus der Umgebung absaugt. Es muss keine bevorzugte Strömungsrichtung beachtet werden.

Zur Anpassung an die Dimension des Glasstrangs ist es vorteilhaft, wenn Blenden verschiedener Größen und/oder mit verschiedenen Öffnungen austauschbar an den Kühlkammern montiert sind. Alternativ dazu kann die jeweilige Blende auch eine variable Öffnung aufweisen. Es kann die Nutzung für ein großes Durchmesserspektrum durch wechselbare, angepasste Blenden erreicht werden.

Bevorzugt ist zwischen der Öffnung und der Oberfläche des Glasstranges ein Spalt mit einer vorgebbaren Breite (Spaltmaß) von 5 bis 20 mm vorgesehen, durch den die turbulente Strömung des gasförmigen Kühlmediums aus der jeweiligen Kühlkammer ausströmt oder in diese einströmt. Die Länge der jeweiligen Kühlkammer beträgt vorzugsweise weniger als 600 mm.

Die Vorrichtung weist auch eine Einrichtung auf, die zum Einblasen des gasförmigen Kühlmediums in die Kühlkammern oder zum Absaugen des gasförmigen Kühlmediums aus den Kühlkammern geeignet ist. Dabei ist die Einrichtung so ausgestaltet, dass ein vorgebbarer Volumenstrom erreicht wird. Das gasförmige Kühlmedium kann ein gekühltes oder ungekühltes gasförmiges Medium, insbesondere Umgebungsluft, sein. Auch kann das gasförmige Kühlmedium ein mit Flüssigkeitströpfchen, insbesondere mit Wassertröpfchen, angereichertes oder übersättigtes gasförmiges Medium sein. Vorzugsweise wird diese Anreicherung durch Versprühen oder Zerstäuben der Flüssigkeit, insbesondere Wasser, in einen Volumenstrom eines gasförmigen Mediums erzeugt. Die turbulente Strömung des gasförmigen Kühlmediums weist vorzugsweise eine Reynoldszahl auf, die größer als 2300 ist.

Bevorzugt wird die Vorrichtung im Verlauf des Rohrzugs zwischen einem Formgebungswerkzeug und einer Abtrenneinheit, der Ziehbahn, angeordnet. Es kann vorgesehen sein, dass die jeweilige Kühlkammer ein unteres Gehäuseteil und ein oberes Gehäuseteil aufweist, das von dem unteren Gehäuseteil abnehmbar oder aufklappbar ausgebildet ist. Die Kühlkammern sind vorzugsweise in einem vorgebbaren Abstand und/oder in einer vorgebbaren Anzahl zueinander angeordnet.

Nachfolgend wird die Erfindung näher im Detail anhand von Ausführungsbeispielen beschrieben, wobei auf die beiliegenden schematischen Zeichnungen Bezug genommen wird, die folgendes darstellen:
- Fig. 1a): zeigt in einer Seitenansicht den Aufbau einer erfindungsgemäßen Vorrichtung mit mehreren Kühlkammern;
- Fig. 1b): zeigt in einer dreidimensionalen Ansicht den Aufbau der erfindungsgemäßen Vorrichtung;
- Fig. 2: veranschaulicht anhand einer Teilansicht der Vorrichtung aus Fig. 1 den erfindungsgemäß im Durchlassbereich des Glasstranges erzeugten Strömungsverlauf das gasförmigen Kühlmediums; und
- Fig. 3: zeigt in drei Teilansichten der oberen Hälfte der verschieden ausgeführte Blenden für die Vorrichtung nach Fig. 1.

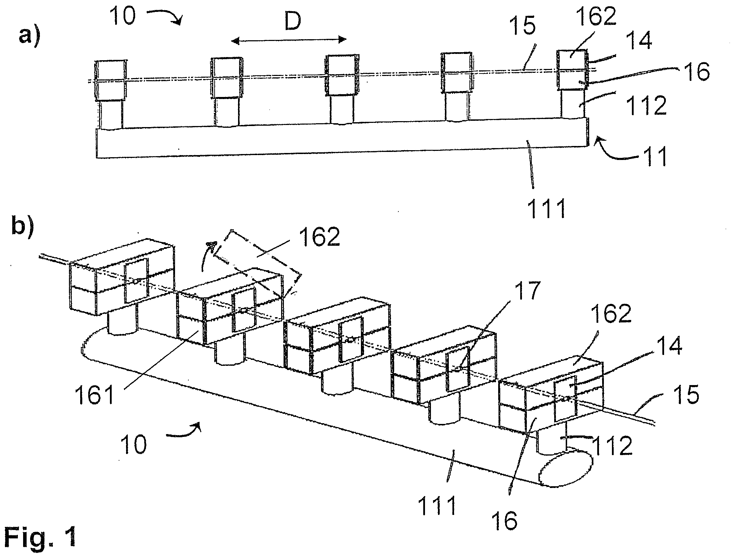

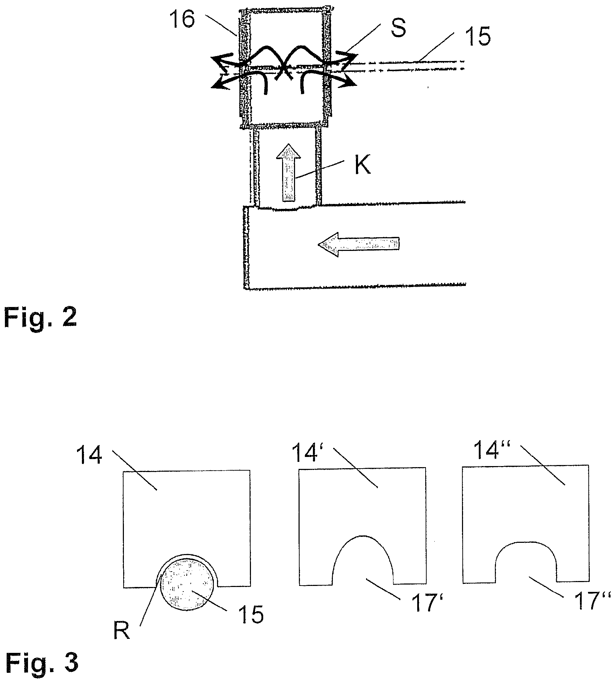

Die Fig. 1 zeigt in verschiedenen Ansichten a) und b) jeweils den Aufbau einer erfindungsgemäßen Vorrichtung 10, die zur Kühlung eines mittels Rohrziehen gefertigten Glasstrangs 15 dient. Dazu weist die Vorrichtung 10 mehrere entlang des Glasstrangs 15 angeordnete Kühlkammern 16 auf, die jeweils eine abschnittsweise Kühlung des Glasstrangs 15 ermöglichen. Die hier dargestellten Kühlkammern 16 haben eine Baulänge von weniger als 600 mm und sind mit einer Einrichtung 11 zur Zu- oder Abfuhr eines gasförmigen Kühlmediums K verbunden. Der Glasstrang 15 wird durch jede der Kühlkammern 16 hindurch geführt, wobei an den jeweiligen Durchführungsstellen eine Blende 14 vorgesehen ist, die eine Öffnung 17 aufweist, welche größer als der Querschnitt des Glasstrangs ist. Somit wird die jeweilige Blende 14 mit einer Öffnung 17 bzw. Durchlassöffnung versehen, die das Austreten bzw. Eintreten des gasförmigen Kühlmediums K erlaubt und die so dimensioniert ist, dass sich zwischen der Öffnung 17 und der Oberfläche des Glasstrangs 15 eine turbulente Strömung S mit Re > 2300 ausbildet. Dies wird später noch näher im Detail anhand der Fig. 2 und 3 beschrieben.

Wie in der Fig. 1 dargestellt, wird der Glasstrang 15 hier beispielsweise durch fünf hintereinander angeordnete Kühlkammern 16 geführt. Die Kühlkammern 16, im weiteren auch als Kühlelemente bezeichnet, sind zueinander in einem Abstand D angeordnet, der beispielsweise 0,5 m beträgt. In Versuchen haben sich auch Kammerabstände von 0,2 und 0,3 m, aber auch Abstände größer als 0,5 m als wirkungsvoll erwiesen. Jede der Kühlkammern 16 ist hier beispielsweise nicht länger als 600 mm und somit deutlich kürzer gestaltet als die aus dem Stand der Technik bekannten Kühlkammern. Zudem sind an den Durchlass-Bereichen Blenden 14 vorgesehen, die nicht direkt in Kontakt mit dem Glasstrang 15 treten. Vielmehr weisen die Blenden eine in Größe und Form definierte Öffnung 17 auf, deren Weite immer größer als der Querschnitt des Glasstrangs 15 ist. Somit entsteht zwischen der Öffnung und dem Glasstrang ein Spalt R (siehe auch Fig. 3), welcher beim Einblasen des gasförmigen Kühlmediums K bzw. beim Absaugen desselben, eine gewisse Verwirbelung in der Kühlkammer 16 hervorruft und somit eine turbulente Strömung S im Ringspalt R erzeugt (siehe auch Fig. 2).

Bevor hier noch näher darauf eingegangen wird, sei anhand der Fig. 1 beschrieben, dass die jeweiligen Kühlkammern 16 einen unteren Gehäuseteil 161 und einen oberen Gehäuseteil 162 aufweisen. Der obere Gehäuseteil 162 ist aufklappbar angeordnet, so dass der Glasstrang 15 sehr einfach in die jeweilige Kühlkammer eingeführt werden kann. Als gasförmiges Kühlmedium K eignet sich unter anderem die Umgebungsluft, welche ungekühlt oder auch gekühlt über die Einrichtung 11 bzw. das Rohrsystem, bestehend aus zentralem Belüftungsrohr 111 und Abzweigrohren 112, zugeführt werden kann. Durch die hier vorgeschlagene Vorrichtung wird ein hoher Wärmeübergang aufgrund der turbulenten Luftströmung mit hoher Geschwindigkeit an der Vielzahl von Blenden erreicht. Dies wiederum führt zu einer sehr effektiven Kühlung des Glasstrangs 15.

Alternativ zu der hier gezeigten Konstruktion der Belüftungs-Einrichtung 11 kann auch nur ein zentrales Belüftungsrohr oder dergleichen (z.B. viereckige Belüftungskanal) vorgesehen sein, der direkt mit den einzelnen Kammern verbunden ist. Die zuvor genannten Abzweigrohre 112 sind in diesem Fall nicht vorhanden. Für die technische Gestaltung des Belüftungs-Bereiches ist eine Vielzahl von Lösungen möglich.

Wie die Fig. 2 veranschaulicht, wird hier jede Kühlkammer 16 über das Belüftungssystem angeblasen. Somit strömt das Kühlmedium K, hier Umgebungsluft, in die eigentliche Kühlkammer 16 ein und verwirbelt dort beim Austritt durch die engen Ringspalte R (s. Fig. 3). Es wird also ein Ringspaltbereich R ausgebildet, der eine turbulente Strömung S erzeugt, welche den Glasstrang 15 berührungslos und sehr effektiv kühlt.

Die Fig. 3 zeigt beispielhaft verschiedene Ausführungsformen von Blenden 14, 14' und 14'', welche sich im Wesentlichen in ihrer jeweiligen Ausgestaltung der Blenden-Öffnung unterscheiden. Beispielsweise weist die erste Blende 14 eine kreisrund ausgestaltete Öffnung auf. Die zweite Blende 14' weist eine ellipsenförmige Öffnung 17' auf und die dritte Blende 14'' weist eine annähernd rechteckförmige Öffnung 17' mit abgerundeten Enden auf. Somit kann die Blenden-Öffnung jeweils an die Querschnittsform des Glasstrangs 15 angepasst werden. Ebenso ist es möglich durch die Variation der Öffnung, eine Veränderung der sich ausprägenden Strömung S bzw. der Turbulenzen zu erzielen.

Bei der hier dargestellten Vorrichtung wird folgendes Verfahren zur Kühlung des Glasstrangs 15 angewendet:
Zunächst wird der Glasstrang 15 zur abschnittsweisen Kühlung durch mehrere entlang des Glasstrangs angeordnete Kühlkammern 16 hindurch geführt. Dann wird an den Durchführungsstellen jeweils eine zwischen der Öffnung der jeweiligen Blende und der Oberfläche des Glasstrangs sich ausbildende turbulente Strömung eines gasförmigen Kühlmediums, wie etwa Luft, erzeugt. Der Glasstrang 15 bzw. das hergestellte Glasrohr oder der hergestellte Glasstab werden also im Wesentlichen an mehreren Abschnitten durch eine symmetrisch sich um das Rohr mit hoher Geschwindigkeit strömende Luft gekühlt. Die vorgesehenen Blenden mit den Öffnungen können variabel gestaltet werden, um an die Geometrie des zu kühlenden Strangs angepasst zu werden und/oder die gewünschte Strömung zu verändern. Das Verfahren und die Vorrichtung können sowohl als Ansaug- wie auch als Ausblaskühlung eingesetzt werden. Dabei wird das gasförmige Kühlmedium entweder durch die jeweiligen Blenden in die Kühlkammern eingesaugt oder wird durch die Blenden aus den Kühlkammern herausgeblasen. Durch die hier beschriebene Konstruktion wird eine hohe Strömungsgeschwindigkeit des gasförmigen Kühlmediums mit einer turbulenten Strömung erreicht, wodurch ein hoher Wärmeübergang zwischen der Glasoberfläche des Glasstrangs und dem kühlenden Medium erreicht wird. Durch die Anzahl der vorgesehenen Kühlkammern bzw. Kühlelemente 16, durch die Geometrie des Ringspaltes R, durch die Veränderung des Luftdrucks und/oder die Luftmenge kann die Kühlleistung variiert werden. Auch kann vorgesehen werden, dass das gasförmige Kühlmedium mit Feuchtigkeit, z.B. in Form von Wassertröpfchen oder Dampf, angereichert wird, um die spezifische Wärmekapazität zu erhöhen.

Die hier vorgeschlagene Erfindung zeichnet sich insbesondere durch folgende Vorteile aus:
Es wird eine über den Glasstrangumfang bzw. Glasrohrumfang gleichmäßige und gezielte Abkühlung mit einer definiert einstellbaren hohen Abkühlgeschwindigkeit erreicht.

Es wird eine Verringerung der für die Kühlung benötigten Menge an Kühlmedium erreicht aufgrund der Verwendung von zwei oder mehreren Kühlkammern, wodurch an deren jeweiligen Öffnungen gezielt ein hoher Wärmeübergang zwischen Glasoberfläche und dem Kühlmedium erreicht wird. Dadurch wird auch die Effizienz der Kühlung insgesamt verbessert. Jede Kühlstelle (Blende) nutzt die kalte Umgebungsluft (als Kühlmedium) nur einmal (also jeweils in frischem Zustand). Die Umgebungsluft bzw. das Kühlmedium wird nicht durch mehrere Kammern hintereinander geführt, wodurch nur die erste(n) Kammer(n) von einem frischen Kühlmedium profitieren würden. Daher können eine hohe Effizienz des Wärmeüberganges und somit eine hohe Kühlleistungs-Effizienz erreicht werden.

Durch die gezielte alternierende Anordnung von Bereichen mit Kühlung (die einzelnen Kühlkammern) und Bereichen ohne Kühlung (Bereiche zwischen den einzelnen Kühlkammern) wird eine hohe Abkühlung unter gleichzeitiger Vermeidung von Spannungen im Glasprodukt erreicht.

Aufgrund der berührungslosen Kühlung bleibt die Oberfläche des Glases erhalten und wird insbesondere nicht durch Risse, Kratzer oder ähnliche Defekte geschädigt.

Durch Variation der Anzahl der Kühlelemente, Einstellung des Druckes oder der Menge des Kühlmediums ist eine deutlich verbesserte Kühlleistung erreichbar, wodurch auch eine kürzere Ziehbahn mit einer verringerten Anzahl an Ziehbahnelementen, insbesondere Lauf- bzw. Stützrollen für den Glasstrang, realisiert werden kann. Damit wiederum wird der Platzbedarf für eine Ziehanlage insgesamt reduziert. Außerdem besteht die Möglichkeit einer Steigerung der Leistung bei bestehenden Rohrzügen und einer Erweiterung des Spektrums der produzierbaren Artikel.

Zusammenfassend wird vorgeschlagen, im Verlauf eines Rohrzuges die Installation einer Vorrichtung zur Kühlung eines gefertigten Glasstrangs vorzusehen. Die Vorrichtung weist mindestens zwei entlang des Glasstranges angeordnete Kühlkammern bzw. Kühlelementen zur abschnittsweisen Kühlung des Glasstranges auf. Dabei wird ein gasförmiges Kühlmedium entweder in die Kühlkammern eingeblasen oder durch die Kammern aus der Umgebung abgesaugt. Der Glasstrang wird durch jede Kühlkammer hindurch geführt, wobei an den Durchführungsstellen jeweils eine Blende vorgesehen ist, deren Öffnung größer als der Querschnitt des Glasstranges ist. Dadurch bildet sich zwischen der Öffnung und der Oberfläche des Glasstranges ein ringförmiger Spalt aus, so dass eine turbulente Strömung des gasförmigen Kühlmediums erzeugt wird, die eine hohe Abkühlrate ermöglicht.

Durch die kurze Baulänge der Kühlkammern und die optimierte Schlitzweite des Ringspaltes können sehr hohe Strömungsgeschwindigkeiten im Blendenbereich erzielt werden. Als Richtwert für die optimierte Dimensionierung des Ringspaltes kann der Durchmesser des Glasstranges herangezogen werden. Ist dieser im Bereich von etwa 10 mm, so sollte der Ringspalt etwa 20 mm groß sein. Ist der Durchmesser des Glasstranges größer als 10 mm, so kann auch der Ringspalt größer sein (etwa 30 mm) ; ist der Durchmesser geringer als 10 mm, so kann der Ringspalt kleiner sein (etwa 10 mm). Interne Versuche der Anmelderin haben gezeigt, dass bei Glasrohren mit einem Außendurchmesser von ca. 10 mm und bei einem Durchsatz (Massenstrom) von 525 kg/h sehr hohe Abkühlungsraten von ca. 25 - 35 K/m erreicht werden können. So wurde z.B. durch eine Vorrichtung mit 5 Kühlkammern bzw. Kühlelementen ein Glasrohr mit 10,75 mm Außendurchmesser und einer Wanddicke von 0,5 mm bei einer Eintrittstemperatur von 435°C geführt. Bei einem Massenstrom von 525 kg/h konnten eine Reynoldszahl von 14400 berechnet und eine Abkühlrate von 27 K/m gemessen werden.

Durch die variable Kühlung, etwa durch Einsatz verschiedener Blenden an Kühlkammern, kann für verschiedene Produktionsbedingungen die gewünschte Glastemperatur beispielsweise für Abtrennverfahren oder für die Beschichtung von Rohren exakt eingestellt werden.

### Bezugszeichenliste

- 10: Vorrichtung mit mehreren Kühlkammern zur Kühlung eines Glasstranges

- 11: Einrichtung (Belüftungs-Einrichtung) zur Zufuhr oder Abfuhr eines gasförmigen Kühlmediums (Umgebungsluft)
- 111: zentrales Belüftungsrohr
- 112: Abzweigrohre

- 14: Blende für Kühlkammer
- 14', 14": weitere Ausführungen davon

- 15: Glasstrang (Rohrzug)

- 16: Kühlkammer
- 161: unteres Gehäuseteil
- 162: oberes Gehäuseteil, aufklappbar

- 17: Öffnung der Blende (Durchlass-Öffnung für Glasstrang)
- 17', 17": weitere Ausführungen davon

- D: Abstand zwischen den Kühlkammern
- K: gasförmiges Kühlmedium (hier Umgebungsluft)
- R: Ringspalt zwischen Blendenöffnung und Glasstrang
- S: turbulente Strömung im Bereich der Durchlass-Öffnung

## Patentansprüche

1. Vorrichtung (10) zur Kühlung eines mittels Rohrziehen gefertigten Glasstrangs (15), **gekennzeichnet durch** mindestens zwei entlang des Glasstranges (15) beabstandet angeordnete Kühlkammern (16) zur abschnittsweisen Kühlung des Glasstranges (15), wobei die Kühlkammern (16) mit einer Einrichtung (11) zur Zu- oder Abfuhr eines gasförmigen Kühlmediums (K) verbunden sind, wobei der Glasstrang (15) durch jede Kühlkammer (16) hindurch geführt ist, und wobei an den Durchführungsstellen jeweils eine Blende (14) vorgesehen ist, deren Öffnung (17) größer als der Querschnitt des Glasstranges (15) ist, um eine zwischen der Öffnung (17) und der Oberfläche des Glasstranges (15) sich ausbildende turbulente Strömung (S) des gasförmigen Kühlmediums (K) zu erzeugen.

2. Vorrichtung (10) nach Anspruch 1, wobei die Kühlkammern (16) in einem vorgebaren Abstand (D), insbesondere in einem Abstand von jeweils 0,2 m bis 0,5 m, zueinander angeordnet sind.

3. Vorrichtung (10) nach Anspruch 1 oder 2, wobei die Einrichtung (11) zur Zu- oder Abfuhr eines gasförmigen Kühlmediums (K) als Belüftungssystem ausgestaltet ist, das das gasförmige Kühlmedium (K) in jede der Kühlkammern (10) einbläst oder durch jede der Kühlkammern (10) aus der Umgebung absaugt.

4. Vorrichtung (10) nach einem der vorhergehenden Ansprüche, wobei Blenden (17) verschiedener Größen und/oder mit verschiedenen Öffnungen (17, 17', 17'') austauschbar an den Kühlkammern (16) montierbar sind, insbesondere Blenden (14), die jeweils eine variable Öffnung aufweisen.

5. Vorrichtung (10) nach einem der vorhergehenden Ansprüche, wobei zwischen der Öffnung (17) und der Oberfläche des Glasstranges (15) ein vorgebbarer Ringspalt (R), insbesondere ein Ringspalt (R) mit einer Abmessung von 5 bis 20 mm, vorgesehen ist, durch den die turbulente Strömung (S) des gasförmigen Kühlmediums (K) aus der jeweiligen Kühlkammer (16) ausströmt oder in die jeweilige Kühlkammer (16) einströmt.

6. Vorrichtung (10) nach einem der vorhergehenden Ansprüche, wobei jede der Kühlkammern (16) in Längsrichtung des Glasstrangs (15) eine Abmessung kleiner als 600 mm aufweist.

7. Vorrichtung (10) nach einem der vorhergehenden Ansprüche, wobei die Einrichtung (11) zum Einblasen des gasförmigen Kühlmediums (K) in die Kühlkammern (16) oder zum Absaugen des gasförmigen Kühlmediums (K) aus den Kühlkammern (16) ausgebildet ist, insbesondere zum Einsaugen oder Ausblasen des gasförmigen Kühlmediums (K) bei einem vorgebbaren Volumenstrom ausgebildet ist.

8. Vorrichtung (10) nach einem der vorhergehenden Ansprüche, wobei das gasförmige Kühlmedium (K) ein gekühltes oder ungekühltes gasförmiges Medium, insbesondere Umgebungsluft, ist.

9. Vorrichtung (10) nach einem der vorhergehenden Ansprüche, wobei das gasförmige Kühlmedium (K) ein mit Flüssigkeitströpfen angereichertes oder übersättigtes gasförmiges Medium ist, insbesondere ein durch Zerstäuben oder Versprühen von Wasser erzeugtes gasförmiges Kühlmedium ist.

10. Vorrichtung (10) nach einem der vorhergehenden Ansprüche, wobei die turbulente Strömung (S) des gasförmigen Kühlmediums (K) eine Reynoldszahl größer 2300, vorzugsweise größer 5000 aufweist.

11. Vorrichtung (10) nach einem der vorhergehenden Ansprüche, wobei die Vorrichtung (10) zwischen einem Formgebungswerkzeug und einer Abtrenneinheit angeordnet ist.

12. Vorrichtung (10) nach einem der vorhergehenden Ansprüche, wobei die jeweilige Kühlkammer (16) ein unteres Gehäuseteil (161) und ein oberes Gehäuseteil (162) aufweist, das von dem unteren Gehäuseteil abnehmbar oder aufklappbar ausgebildet ist.

13. Vorrichtung (10) nach einem der vorhergehenden Ansprüche, wobei die Kühlkammern (16) in einer vorgebbaren Anzahl zueinander angeordnet sind.

14. Verfahren zur Kühlung eines mittels Rohrziehen gefertigten Glasstrangs (15), **dadurch gekennzeichnet, dass** der Glasstrang (15) zur abschnittsweisen Kühlung durch mindestens zwei entlang des Glasstranges (15) beabstandet angeordnete Kühlkammern (16) hindurch geführt wird, wobei an den Durchführungsstellen jeweils eine zwischen der Öffnung (17) und der Oberfläche des Glasstranges (15) sich ausbildende turbulente Strömung (18) eines gasförmigen Kühlmediums erzeugt wird.

15. Verfahren nach Anspruch 14, wobei das gasförmige Kühlmediums (K) bei einem vorgebbaren Volumenstrom in die Kühlkammern (16) eingeblasen oder aus den Kühlkammern (16) abgesaugt wird.

16. Verfahren nach Anspruch 14 oder 15, wobei als gasförmiges Kühlmedium (K) ein gekühltes oder ungekühltes gasförmiges Medium, insbesondere Umgebungsluft, eingeblasen oder abgesaugt wird.

17. Verfahren nach einem der Ansprüche 14 bis 16, wobei das gasförmige Kühlmedium (K) mit Flüssigkeitströpfchen , angereichert oder übersättigt wird.

## Claims

1. A device (10) for cooling a glass strand (15) manufactured by drawing, **characterized by** at least two cooling chambers (16) which are arranged spaced along the glass strand (15) for cooling the glass strand (15) section by section, wherein the cooling chambers (16) are connected with a facility (11) for feeding or removing a gaseous cooling medium (K), wherein the glass strand (15) is passed through each cooling chamber (16) and wherein at the pass-through sites an aperture (14) is provided each, wherein the opening thereof (17) is larger than the cross-section of the glass strand (15) for generating a turbulent flow (S) of the gaseous cooling medium (K) which is formed between the opening (17) and the surface of the glass strand (15).

2. The device (10) according to claim 1, wherein the cooling chambers (16) are arranged to each other in a settable distance (D), in particularly in a distance of 0.2 m to 0.5 m each.

3. The device (10) according to claim 1 or 2, wherein the facility (11) for feeding or removing a gaseous cooling medium (K) is designed as ventilation system which injects the gaseous cooling medium (K) into all cooling chambers (10) or which withdraws it through all cooling chambers (10) from the surroundings by suction.

4. The device (10) according to one of the preceding claims, wherein apertures (17) of different sizes and/or with different openings (17, 17', 17") can be installed at the cooling chambers (16) in an exchangeable manner, in particularly apertures (14) having a variable opening each.

5. The device (10) according to one of the preceding claims, wherein between the opening (17) and the surface of the glass strand (15) a settable annular gap (R), in particularly an annular gap (R) with a dimension of 5 to 20 mm, is provided, through which the turbulent flow (S) of the gaseous cooling medium (K) flows out of the respective cooling chamber (16) or flows into the respective cooling chamber (16).

6. The device (10) according to one of the preceding claims, wherein any one of the cooling chambers (16) in longitudinal direction of the glass strand (15) has a dimension of smaller than 600 mm.

7. The device (10) according to one of the preceding claims, wherein the facility (11) is designed for injecting the gaseous cooling medium (K) into the cooling chambers (16) or for withdrawing the gaseous cooling medium (K) from the cooling chambers (16) by suction, in particularly is designed for sucking in or blowing out the gaseous cooling medium (K) with a settable volumetric flow rate.

8. The device (10) according to one of the preceding claims, wherein the gaseous cooling medium (K) is a cooled or uncooled gaseous medium, in particularly ambient air.

9. The device (10) according to one of the preceding claims, wherein the gaseous cooling medium (K) is a gaseous medium being enriched or oversaturated with small liquid droplets, in particularly a gaseous cooling medium which is generated by atomizing or spraying water.

10. The device (10) according to one of the preceding claims, wherein the turbulent flow (S) of the gaseous cooling medium (K) is **characterized by** a Reynolds number of higher than 2300, preferably higher than 5000.

11. The device (10) according to one of the preceding claims, wherein the device (10) is arranged between a forming tool and a cutoff unit.

12. The device (10) according to one of the preceding claims, wherein the respective cooling chamber (16) comprises a lower casing part (161) and an upper casing part (162) which has a design such that it can be detached from or opened with respect to the lower casing part.

13. The device (10) according to one of the preceding claims, wherein the cooling chambers (16) are arranged to each other in a settable number.

14. A method for cooling a glass strand (15) manufactured by drawing, **characterized in that** the glass strand (15) for cooling section by section is passed through at least two cooling chambers (16) which are arranged spaced along the glass strand (15), wherein at the pass-through sites a turbulent flow (18) of a gaseous cooling medium which is formed between the opening (17) and the surface of the glass strand (15) is generated each.

15. The method according to claim 14, wherein the gaseous cooling medium (K) is injected into the cooling chambers (16) or is withdrawn from the cooling chambers (16) by suction with a settable volumetric flow rate.

16. The method according to claim 14 or 15, wherein as gaseous cooling medium (K) a cooled or uncooled gaseous medium, in particularly ambient air, is injected or withdrawn by suction.

17. The method according to one of claims 14 to 16, wherein the gaseous cooling medium (K) is enriched or oversaturated with small liquid droplets.

## Revendications

1. Dispositif (10) pour refroidir une barre de verre (15) fabriquée par étirage de tube, **caractérisé par** au moins deux chambres de refroidissement (16) espacées le long de la barre de verre (15) et destinées à refroidir la barre de verre (15) par portions, les chambres de refroidissement (16) étant reliées à un dispositif (11) d'alimentation en ou d'évacuation d'un milieu de refroidissement gazeux (K), la barre de verre (15) étant guidée à travers chaque chambre de refroidissement (16), et un orifice (14) étant prévu aux points de passage, l'ouverture (17) de l'orifice étant supérieure à la section transversale de la barre de verre (15) afin de générer un écoulement turbulent (S) entre l'ouverture (17) et la surface de la barre de verre (15) et former un milieu de refroidissement gazeux (K).

2. Dispositif (10) selon la revendication 1, dans lequel les chambres de refroidissement (16) sont disposées à une distance prédéterminée (D), en particulier à une distance de 0,2 m à 0,5 m.

3. Dispositif (10) selon la revendication 1 ou 2, dans lequel le dispositif (11) d'alimentation en ou d'évacuation d'un milieu de refroidissement gazeux (K) est conçu comme un système de ventilation qui souffle le milieu de refroidissement gazeux (K) dans chacune des chambres de refroidissement (10) ou qui l'aspire depuis l'environnement à travers chacune des chambres de refroidissement (10).

4. Dispositif (10) selon l'une des revendications précédentes, dans lequel des orifices (17) de différentes dimensions et/ou pourvus de différentes ouvertures (17, 17', 17'') peuvent être montés de manière interchangeable sur les chambres de refroidissement (16), en particulier des orifices (14) pourvus chacun d'une ouverture variable.

5. Dispositif (10) selon l'une des revendications précédentes, dans lequel un espace annulaire prédéterminable (R), en particulier un espace annulaire (R) d'une dimension de 5 à 20 mm, est ménagé entre l'ouverture (17) et la surface de la barre de verre (15) et permet à l'écoulement turbulent (S) du milieu de refroidissement gazeux (K) de sortir de la chambre de refroidissement respective (16) ou d'entrer dans la chambre de refroidissement respective (16).

6. Dispositif (10) selon l'une des revendications précédentes, dans lequel chacune des chambres de refroidissement (16) a une dimension inférieure à 600 mm dans la direction longitudinale de la barre de verre (15).

7. Dispositif (10) selon l'une des revendications précédentes, dans lequel le dispositif (11) est conçu pour souffler le milieu de refroidissement gazeux (K) dans les chambres de refroidissement (16) ou pour aspirer le milieu de refroidissement gazeux (K) des chambres de refroidissement (16), en particulier pour aspirer ou souffler le milieu de refroidissement gazeux (K) à un débit volumique prédéterminé.

8. Dispositif (10) selon l'une des revendications précédentes, dans lequel le milieu de refroidissement gazeux (K) est un milieu gazeux, notamment de l'air ambiant, refroidi ou non refroidi.

9. Dispositif (10) selon l'une des revendications précédentes, dans lequel le milieu de refroidissement gazeux (K) est un milieu gazeux enrichi ou sursaturé en gouttelettes de liquide, notamment un milieu de refroidissement gazeux généré par atomisation ou pulvérisation d'eau.

10. Dispositif (10) selon l'une des revendications précédentes, dans lequel l'écoulement turbulent (S) du milieu de refroidissement gazeux (K) a un nombre de Reynolds supérieur à 2300, de préférence supérieur à 5000.

11. Dispositif (10) selon l'une des revendications précédentes, dans lequel le dispositif (10) est disposé entre un outil de mise en forme et une unité de séparation.

12. Dispositif (10) selon l'une des revendications précédentes, dans lequel la chambre de refroidissement respective (16) comporte une partie de boîtier inférieure (161) et une partie de boîtier supérieure (162) qui est conçue pour être retirée de ou pliable par rapport à la partie de boîtier inférieure.

13. Dispositif (10) selon l'une des revendications précédentes, dans lequel les chambres de refroidissement (16) sont disposées les unes par rapport aux autres selon un nombre prédéterminé.

14. Procédé de refroidissement d'une barre de verre (15) réalisé par étirage de tube, **caractérisé en ce que** la barre de verre (15) est guidée à travers au moins deux chambres de refroidissement (16) espacées le long de la barre de verre (15) pour effectuer un refroidissement par portions, un écoulement turbulent (18) se formant aux points de passage entre l'ouverture (17) et la surface de la barre de verre (15) pour générer un milieu de refroidissement gazeux.

15. Procédé selon la revendication 14, dans lequel le milieu de refroidissement gazeux (K) est soufflé dans les chambres de refroidissement (16) ou aspiré des chambres de refroidissement (16) à un débit volumique prédéterminé.

16. Procédé selon la revendication 14 ou 15, dans lequel un milieu gazeux, en particulier de l'air ambiant, refroidi ou non refroidi est soufflé ou aspiré sous la forme d'un milieu de refroidissement gazeux (K).

17. Procédé selon l'une des revendications 14 à 16, dans lequel le milieu de refroidissement gazeux (K) est enrichi ou sursaturé en gouttelettes de liquide.
